(19) Europäisches Patentamt / European Patent Office / Office européen des brevets

(11) **EP 2 634 561 A1**

(12) **EUROPEAN PATENT APPLICATION**
published in accordance with Art. 153(4) EPC

(43) Date of publication:
**04.09.2013  Bulletin 2013/36**

(21) Application number: **11836036.1**

(22) Date of filing: **13.10.2011**

(51) Int Cl.:
*G01N 21/64* (2006.01)        *G01N 21/78* (2006.01)

(86) International application number:
**PCT/JP2011/073558**

(87) International publication number:
**WO 2012/056897 (03.05.2012 Gazette 2012/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.10.2010   JP 2010240019**

(71) Applicants:
• **Olympus Corporation**
  **Shibuya-ku**
  **Tokyo 151-0072 (JP)**
• **Terumo Kabushiki Kaisha**
  **Tokyo 151-0072 (JP)**

(72) Inventors:
• **MAEDA Kazuya**
  **Tokyo 151-0072 (JP)**
• **KOHNO Hiromasa**
  **Kanagawa 259-0151**
  **(JP)**

(74) Representative: **Winter, Brandl, Fürniss, Hübner,
Röss, Kaiser, Polte - Partnerschaft
Alois-Steinecker-Strasse 22
85354 Freising (DE)**

(54)    **METHOD FOR CORRECTING FLUORESCENT SENSOR, AND FLUORESCENT SENSOR**

(57)    A correction method of a fluorescence sensor includes a first detection signal acquiring step for acquiring, at a first temperature, a first detection signal using a fluorescence sensor 10 including an LED element 12, an indicator layer 16, and a PD element 13 configured to output a detection signal in which an excitation light detection signal is superimposed on a fluorescent light detection signal, the fluorescence sensor 10 having a temperature detecting function and a temperature adjusting function, a second detection signal acquiring step for acquiring, at a second temperature, a second detection signal when an analyte amount is the same as an analyte amount in the first detection signal acquiring step, a correction coefficient calculating step for calculating, on the basis of the first detection signal and the second detection signal, a correction coefficient for correcting the fluorescent light detection signal, and a correcting step for correcting subsequent detection signals using the correction coefficient and a temperature detection signal.

**FIG.4**

EP 2 634 561 A1

**Description**

Technical Field

The present invention relates to a fluorescence sensor for measuring concentration of an analyte and a correction method of the fluorescence sensor, and more particularly, to a fluorescence sensor which is a micro-fluorescence spectrophotometer manufactured using a semiconductor manufacturing technique and an MEMS technique and a correction method of the fluorescence sensor.

Background Art

Various analyzers for checking presence of an analyte, i.e., a substance to be measured in liquid or measuring concentration of the analyte have been developed. For example, there is a known fluorescence spectrophotometer for injecting fluorescent pigment, which changes in characteristics because of presence of an analyte and generates fluorescent light, and a solution to be measured including the analyte into a transparent container having a fixed capacity and irradiating excitation light E to measure fluorescent light intensity from the fluorescent pigment to thereby measure the concentration of the analyte.

A small fluorescence spectrophotometer includes a photodetector and an indicator layer containing fluorescent pigment. When the excitation light E from a light source is irradiated on the indicator layer into which the analyte in the solution to be measured can penetrate, the fluorescent pigment in the indicator layer generates fluorescent light having a light amount corresponding to the analyte concentration in the solution to be measured. The photodetector receives the fluorescent light. The photodetector is a photoelectric conversion element. The photodetector outputs an electric signal corresponding to the light amount of the received fluorescent light. The analyte concentration in the solution to be measured is measured from the electric signal.

In recent years, in order to measure an analyte in a micro-volume sample, a micro-fluorescence spectrophotometer manufactured using the semiconductor manufacturing technique and the MEMS technique has been proposed. The micro-fluorescence spectrophotometer is hereinafter referred to as a "fluorescence sensor".

For example, a fluorescence sensor 110 shown in Figs. 1 and 2 is disclosed in United States Patent No. 5039490. The fluorescence sensor 110 is configured by a transparent supporting substrate 101 through which excitation light E can be transmitted, an optical tabular section 105 including a photoelectric conversion element 103 configured to convert fluorescent light into an electric signal and a light-condensing function section 105A configured to condense the excitation light E, an indicator layer 106 configured to interact with an analyte 9 to thereby generate fluorescent light through incidence of the excitation light E, and a cover layer 109.

The photoelectric conversion element 103 is, for example, a photoelectric conversion element formed on a substrate 103A made of silicon. The substrate 103A does not transmit the excitation light E. Therefore, the fluorescence sensor 110 includes, around the photoelectric conversion element 103, an air gap region 120 through which the excitation light E can be transmitted.

That is, only the excitation light E transmitted through the air gap region 120 and made incident on the optical tabular section 105 is condensed in the vicinity of an upper part of the photoelectric conversion element 103 in the indicator layer 106 by action of the optical tabular section 105. Fluorescent light F is generated by interaction of condensed excitation light E2 and the analyte 9 penetrating into an inside of the indicator layer 106. A part of the generated fluorescent light F is made incident on the photoelectric conversion element 103. A signal of an electric current, a voltage, or the like proportional to fluorescent light intensity, i.e., the concentration of the analyte 9 is generated in the photoelectric conversion element 103. Note that the excitation light E is not made incident on the photoelectric conversion element 103 by action of a filter (not shown in the figure) formed to cover the photoelectric conversion element 103.

As explained above, in the fluorescence sensor 110, on the transparent supporting substrate 101, a photodiode, which is the photoelectric conversion element 103, is formed on the substrate 103A in which the air gap region 120, which is a passage of the excitation light E, is secured. The optical tabular section 105 and the indicator layer 106 are laminated on the substrate 103A.

However, in the fluorescence sensor 110, a part of the excitation light E reflected/scattered among materials configuring the sensor is made incident on the photoelectric conversion element 103 even if the part of the excitation light E is cut by the filter provided on the photoelectric conversion element 103. A light amount of the excitation light E made incident on the photoelectric conversion element 103 is different for each of sensors. Then, as detection signals from the photoelectric conversion element 103, an excitation light detection signal is superimposed on a fluorescent light detection signal. Therefore, accurate analyte concentration sometimes cannot be measured.

It is an object of an embodiment of the present invention to provide a fluorescence sensor having high detection accuracy and a correction method of the fluorescence sensor.

Disclosure of Invention

Means for Solving the Problem

A correction method of a fluorescence sensor according to an aspect of the present invention includes: a first detection signal acquiring step for acquiring, at a first temperature, a first detection signal using a fluorescence sensor including a light-emitting element configured to generate excitation light, an indicator layer configured to generate fluorescent light corresponding to the excitation light and an analyte amount, and a photoelectric conversion element configured to output a detection signal in which an excitation light detection signal due to the excitation light is superimposed on a fluorescent light detection signal due to the fluorescent light, the fluorescence sensor having a temperature detecting function for outputting a temperature detection signal and a temperature adjusting function; a second detection signal acquiring step for acquiring, at a second temperature, a second detection signal when the analyte amount is the same as the analyte amount in the first detection signal acquiring step; a correction coefficient calculating step for calculating, on the basis of the first detection signal and the second detection signal, a correction coefficient for correcting the fluorescent light detection signal; and a correcting step for correcting subsequent detection signals using the correction coefficient and the temperature detection signal.

A fluorescence sensor according to another aspect of the present invention includes: a light-emitting element configured to generate excitation light; an indicator layer configured to generate fluorescent light corresponding to the excitation light and an analyte amount; and a photoelectric conversion element configured to output a detection signal in which an excitation light detection signal due to the excitation light is superimposed on a fluorescent light detection signal due to the fluorescent light, in which the fluorescence sensor has a temperature detecting function for outputting a temperature detection signal and a temperature adjusting function.

Brief Description of the Drawings

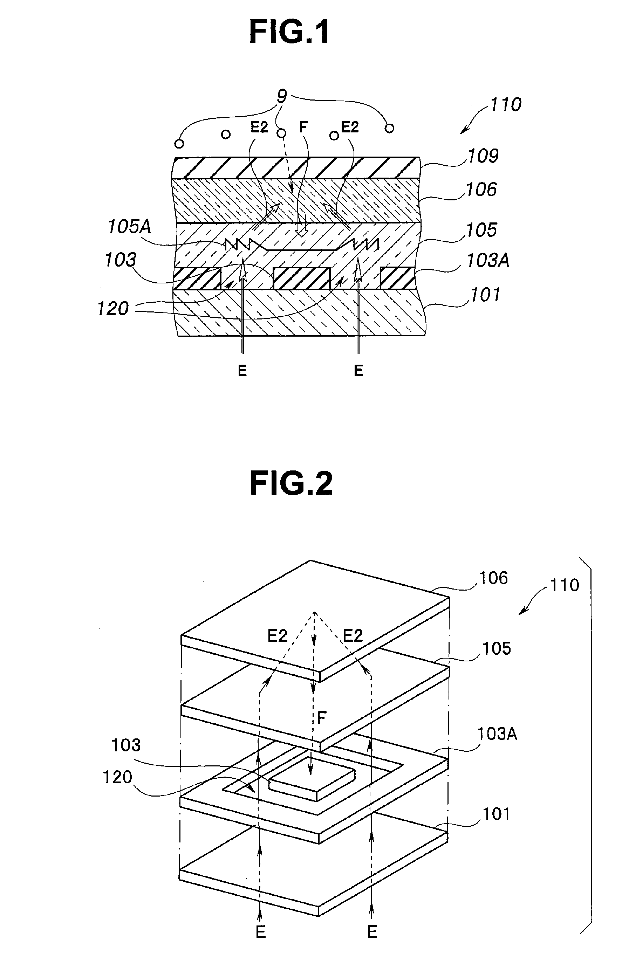

Fig. 1 is an explanatory diagram showing a sectional structure of a publicly-known fluorescence sensor;
Fig. 2 is an exploded view for explaining a structure of the publicly-known fluorescence sensor;
Fig. 3 is an explanatory diagram showing a configuration of a sensor system according to an embodiment;
Fig. 4 is an explanatory diagram showing a sectional structure of a fluorescence sensor according to the embodiment;
Fig. 5 is an exploded view for explaining a structure of the fluorescence sensor according to the embodiment;
Fig. 6 is an explanatory diagram for explaining correction processing by the fluorescence sensor according to the embodiment;
Fig. 7 is a flowchart for explaining the correction processing by the fluorescence sensor according to the embodiment; and
Fig. 8 is a time chart for explaining the correction processing by a fluorescence sensor according to the embodiment.

Best Mode for Carrying Out the Invention

<System configuration>

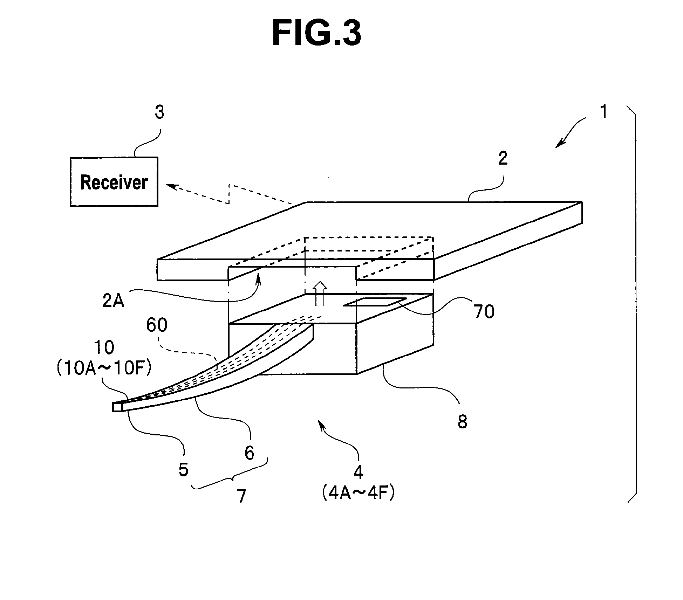

As shown in Fig. 3, a needle-type fluorescence sensor 4 including a fluorescence sensor 10 according to an embodiment of the present invention configures a sensor system 1 in conjunction with a main body section 2 and a receiver 3.

That is, the sensor system 1 includes the needle-type fluorescence sensor 4, the main body section 2, and the receiver 3 that receives and stores a signal from the main body section 2. Transmission and reception of a signal between the main body section 2 and the receiver 3 is performed by radio or by wire.

The needle-type fluorescence sensor 4 includes a needle section 7 including a needle distal end portion 5, which includes the fluorescence sensor 10 as a main functional section, and an elongated needle main body portion 6, and a connector section 8 integrated with a rear end portion of the needle main body portion 6. The needle distal end portion 5, the needle main body portion 6, and the connector section 8 may be integrally formed by the same material.

The connector section 8 detachably fits with a fitting section 2A of the main body section 2. The connector section 8 mechanically fits with the fitting section 2A of the main body section 2, whereby a plurality of wires 60 extended from the fluorescence sensor 10 of the needle-type fluorescence sensor 4 are electrically connected to the main body section 2. The connector section 8 includes an arithmetic section 70 configured to perform control and an arithmetic operation for subjecting a detection signal from the fluorescence sensor 10 to correction processing.

Although not shown in the figure, the main body section 2 includes a radio antenna for transmitting and receiving a radio signal between the main body section 2 and the receiver 3, and a battery and the like. When wired transmission and reception is performed between the main body section 2 and the receiver 3, the main body section 2 includes a signal line instead of the radio antenna. Note that the main body section 2 or the receiver 3 may include an arithmetic section.

The fluorescence sensor 10 is a disposable section that is discarded after use to prevent infection or the like. However, the main body section 2 and the receiver 3 are reusable sections that are repeatedly reused. Note that, when the main body section 2 includes a memory section having a necessary capacity, the receiver 3 is unnecessary.

In a state in which the needle-type fluorescence sensor 4 is fit with the main body section 2, a subject himself/herself stabs the needle-type fluorescence sensor 4 from a body surface. The needle distal end portion 5 is retained in a body. For example, the needle-type fluorescence sensor 4 continuously measures glucose concentration in body fluid and stores the glucose concentration in a memory of the receiver 3. That is, the fluorescence sensor 10 according to the present embodiment is a sensor of a short-term subcutaneous retaining type that is continuously used for about one week.

<Fluorescence sensor structure>

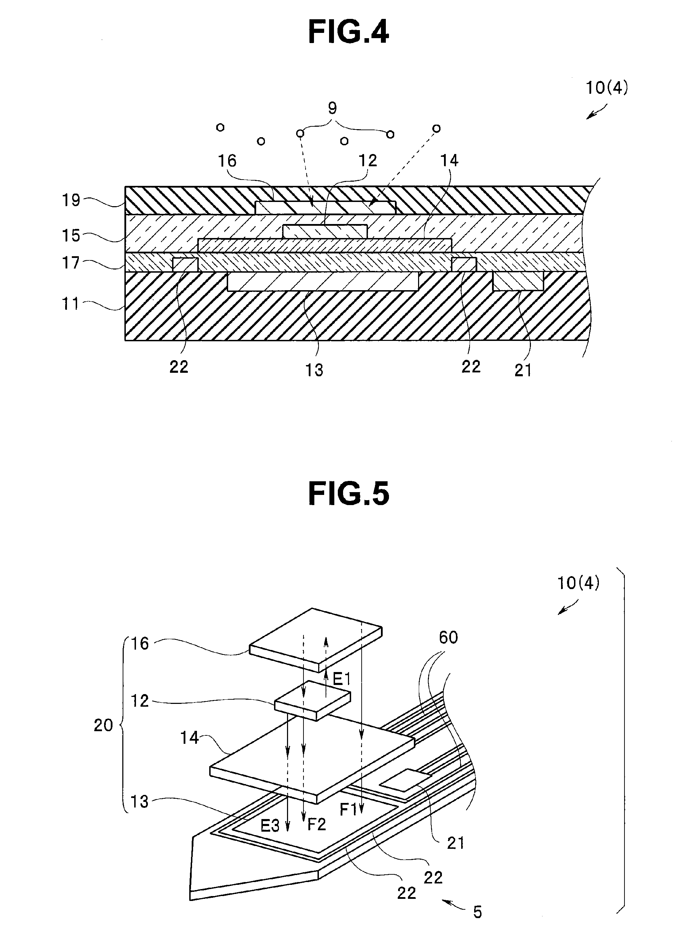

As shown in Figs. 4 and 5, the fluorescence sensor 10, which is a main functional section of the needle-type fluorescence sensor 4 according to the present invention, has a structure in which an N-type silicon substrate 11, which is a base substrate, a photo diode (hereinafter also referred to as "PD") element 13, which is a photoelectric conversion element, a silicon oxide layer 17, a filter 14, a light emitting diode (hereinafter also referred to as "LED") element 12, which is a light-emitting element that transmits fluorescent light, a transparent resin layer 15, an indicator layer 16, and a light blocking layer 19 are laminated in order from the silicon substrate 11 side.

At least respective parts of the PD element 13, the filter 14, the LED element 12, and the indicator layer 16 are formed in the same region on an upper side of the silicon substrate 11. It is desirable that, in the fluorescence sensor 10, respective centers of the PD element 13, the filter 14, the LED element 12, and the indicator layer 16 are formed in the same region on the upper side of the silicon substrate 11.

That is, in the fluorescence sensor 10, the LED element 12, which is the light-emitting element that transmits fluorescent light from the indicator layer 16, is used, whereby a structure completely different from a publicly-known fluorescence sensor is realized.

As the photoelectric conversion element, various photoelectric conversion elements such as a photoconductor or a photo transistor (PT) can also be selected.

The silicon oxide layer 17 is a first protective layer. As the first protective layer having thickness of several tens to several hundreds of nanometers, a silicon nitride layer or a composite laminated layer including a silicon oxide layer and a silicon nitride layer may be used.

The filter 14 is, for example, an absorption-type filter that does not transmit excitation light E generated by the LED element 12 and transmits fluorescent light F having wavelength longer than wavelength of the excitation light E. The filter 14 may be a band-pass filter that allows only fluorescent light to pass. However, actually, a part of the excitation light E is transmitted through the filter 14 and made incident on the LED element 12. Note that the filter 14 is not an essential constituent element for the fluorescence sensor 10 that performs correction processing as explained below.

The LED element 12 is a light-emitting element that emits excitation light and transmits fluorescent light. The transparent resin layer 15 is a second protective layer. As the second protective layer, for example, silicone resin or transparent amorphous fluorocarbon resin used in bonding the LED element 12 to the filter 14 can also be used.

As a characteristic of the second protective layer of the fluorescence sensor 10, it is important that generation of fluorescent light is little in the layer even if excitation light is irradiated on the layer. It goes without saying that this characteristic that generation of fluorescent light is little is an important characteristic of all transparent materials of the fluorescence sensor 10 excluding the indicator layer 16.

The indicator layer 16 generates fluorescent light according to an interaction with an analyte 9 penetrating into the indicator layer 16 and excitation light, i.e., generates fluorescent light having a light amount corresponding to concentration of the analyte 9. Thickness of the indicator layer 16 is set to about several tens of micrometers. The indicator layer 16 is configured by a base material including fluorescent pigment that generates fluorescent light having intensity corresponding to an amount of the analyte 9, i.e., analyte concentration in a specimen. Note that a base material of the indicator layer 16 desirably has transparency for allowing excitation light from the LED element 12 and fluorescent light from the fluorescent pigment to be satisfactorily transmitted through the indicator layer 16. The fluorescent pigment may be the analyte 9 itself present in the specimen.

The fluorescent pigment is selected according to a type of the analyte 9. Any fluorescent pigment can be used as long as a light amount of the fluorescent light emitted according to the amount of the analyte 9 reversibly changes. For example, when hydrogen ion concentration or carbon dioxide in a living organism is measured, a hydroxypyrene-tris sulfonic acid derivative can be used. A phenylboronic acid derivative having a fluorescence residue can be used when saccharides are measured. A crown ether derivative having a fluorescence residue can be used when a potassium ion is measured.

When saccharides such as glucose are measured, as the fluorescent pigment, a substance that reversibly couples with glucose such as a ruthenium organic complex, a phenylboronic acid derivative, or fluorescein coupled with protein can be used.

As explained above, the fluorescence sensor 10 according to the present invention is adapted to various uses such as an oxygen sensor, a glucose sensor, a pH sensor, an immunosensor, or a microbial sensor according to the selection of the fluorescent pigment.

The indicator layer 16 has, for example, an easily-hydrated hydrogel as a base material. In the hydrogel, the fluorescent pigment is contained or coupled. As a component of the hydrogel, for example, a polysaccharide such as methylcellulose or dextran can be used.

The indicator layer 16 is joined to the transparent resin layer 15 via a not-shown adhesive layer formed of a silane coupling agent or the like. Note that a structure in which the transparent resin layer 15 is not formed and the indicator layer 16 is directly joined to a surface of the LED element 12 may be adopted.

The light blocking layer 19 is a layer having thickness equal to or smaller than several tens of micrometers formed on an upper surface side of the indicator layer 16. The light blocking layer 19 prevents excitation light and fluorescent light from leaking to an outside of the fluorescence sensor 10 and, at the same time, prevents external light from penetrating into an inside of the fluorescence sensor 10.

The fluorescence sensor 10 further includes a temperature sensor 21 having a temperature detecting function and a heater 22 having a temperature adjusting function.

The temperature sensor 21 performs temperature measurement for a photodetection system 20 including the PD element 13, the filter 14, the LED element 12, and the indicator layer 16 and outputs a temperature detection signal. A variety of devices such as a diode, a thermistor, and a thermocouple can be applied to the temperature sensor 21. When a PD element is used as the photoelectric conversion element, the PD element can be formed on the substrate 11 simultaneously with formation of the PD element 13 by the same diode structure. The temperature sensor 21 is set near the photodetection system 20.

Note that, in the fluorescence sensor 10 including the PD element 13 as the photoelectric conversion element, the PD element 13 can be used as the temperature sensor 21 as well. That is, the PD element 13 can be used as the temperature sensor 21 as well when a photoelectric conversion operation is not performed. In this case, it is unnecessary to dispose the temperature sensor 21 exclusive for temperature measurement.

An error between temperature detected by the temperature sensor 21 arranged near the silicon substrate 11 having high thermal conductivity and temperature of the photodetection system 20 is small. When a substrate is not a high-thermal conductivity material, it is desirable to dispose a high-thermal conductivity body around the photodetection system 20 and arrange the temperature sensor 21 in a position where the temperature sensor 21 is in contact with the high-thermal conductivity body.

The heater 22, which is a temperature adjusting section having the temperature adjusting function, is a heat generating member for heating the photodetection system 20 to a predetermined temperature, for example, 40°C. The heater 22 is a resistance heating type heater formed of a metal wire of aluminum or gold, conductive ceramic, carbon, conductive resin, or the like. The resistance heating type heater can be formed of a single material. However, when the resistance heating type heater includes a low-resistance wire and a high-resistance wire, local heating is possible. The temperature of the photodetection system 20 may be equalized by configuring the temperature adjusting section with a heat generating section and a heat transfer section made of a high thermal conductivity material and disposing the heat transfer section around the photodetection system 20.

Further, other constituent members of the fluorescence sensor 10 may have the temperature adjusting function. For example, the LED element 12 continuously emits light to thereby generate heat. When the photoelectric conversion element is a diode, if an electric current in a forward direction is fed to the diode, the diode generates heat. In this case, it is unnecessary to dispose a heat adjusting section exclusive for heating.

<Basic operation of the fluorescence sensor 10>

Next, a basic operation of the fluorescence sensor 10 is explained with reference to Figs. 4 and 5.

The LED element 12 emits, in a pulse-like manner, the excitation light E having center wavelength of about 375 nm, for example, at an interval of once in thirty seconds. For example, a pulse current to the LED element 12 is 1 mA to 100 mA and pulse width of light emission is 10 ms to 100 ms.

Excitation light E1 generated by the LED element 12 is made incident on the indicator layer 16. The indicator layer 16 emits the fluorescent light F having intensity corresponding to an amount of the analyte 9. The analyte 9 penetrates into the indicator layer 16 passing through the light blocking layer 19. The fluorescent pigment of the indicator layer 16 generates the fluorescent light F having larger wavelength, for example, wavelength of 460 nm with respect to the excitation light E having wavelength of 375 nm.

In the fluorescence sensor 10, the excitation light E generated by the LED element 12 is irradiated in upward and downward directions. The excitation light E1 irradiated in the upward direction is irradiated on the fluorescent pigment in the indicator layer 16. In the fluorescent light F generated by the fluorescent pigment, both of fluorescent light F1 passing through the LED element 12 and the filter 14 and reaching the PD element 13 and fluorescent light F2 passing through the filter 14 and reaching the PD element 13 are converted into an electric signal in the PD element 13. In the following explanation, the electric signal due to the fluorescent lights F1 and F2 is referred to as fluorescent light detection signal $V_F$.

On the other hand, excitation light E2 radiated downward from the LED element 12 passes through the filter 14 and the like. A part of excitation light E3 reaches the PD element 13. The excitation light E3 is noise light inevitably generated according to a characteristic of the filter 14 and a structure of the fluorescence sensor 10. In the following explanation, an electric signal due to the excitation light E3 is referred to as an excitation light detection signal $V_{EX}$.

That is, in a detection signal V outputted by the PD element 13, the excitation light detection signal $V_{EX}$ is superimposed on the fluorescent light detection signal $V_F$. Since intensity $L_{EX}$ of excitation light and the excitation light detection signal $V_{EX}$ are different for each fluorescence sensor, the intensity $L_{EX}$ of excitation light and the excitation light detection signal $V_{EX}$ are causes of deterioration in detection accuracy of the fluorescence sensor 10.

<Correction processing>

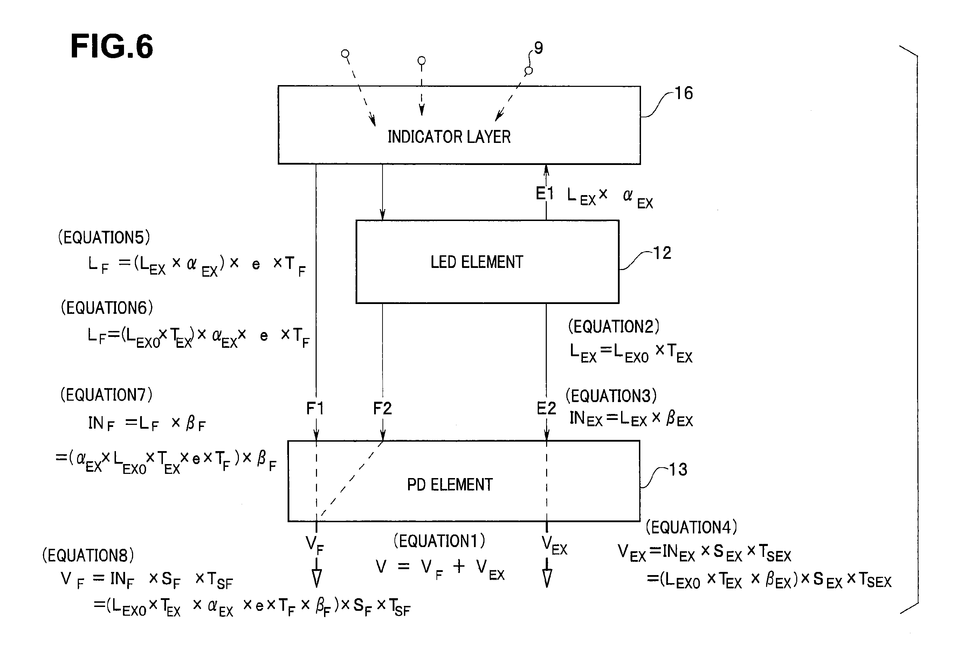

Next, correction processing by the fluorescence sensor 10 is explained with reference to Fig. 6.

The fluorescence sensor 10 performs, with an arithmetic operation, correction processing for removing the excitation light detection signal $V_{EX}$ from the detection signal V and extracting only the fluorescent light detection signal $V_F$.

That is, the fluorescence sensor 10 performs, using the heater 22 having the temperature adjusting function and the temperature sensor 21 having the temperature detecting function, correction processing for calculating a correction coefficient for calculating the fluorescent light detection signal $V_F$ on the basis of a plurality of detection signals V at a plurality of different temperatures and corrects subsequent detection signals on the basis of a result of the correction processing.

In the following explanation, a detection signal measured at temperature T, i.e., a photoelectromotive force outputted by the PD element 13 is represented as V and, for example, a detection signal measured at temperature $T_1$ is represented as $V_1$. The fluorescence sensor 10 is heated by the heater 22. A detection signal at the time when the fluorescence sensor 10 is heated to temperature T2 is represented as $V_2$. Volume of the photodetection system 20 is about several mm$^3$. Therefore, a temperature rise of several degrees Celsius to ten-odd degrees Celsius occurs in several seconds to several tens of seconds from start of the heating. The correction processing is performed at timing when a sudden change does not occur in analyte concentration. Therefore, an analyte concentration change in several seconds to several tens of seconds can be neglected. Therefore, analyte concentration C during the correction processing can be regarded as a constant $C_0$.

As explained above, the detection signal V, which is a sensor output, is configured by the excitation light detection signal $V_{EX}$ and the fluorescent light detection signal $V_F$. Therefore, the detection signal is represented by (Equation 1).

$$V = V_{EX} + V_F \qquad \text{(Equation 1)}$$

First, an expression representing temperature dependency of the excitation light detection signal $V_{EX}$ is calculated.

An excitation light emission amount $L_{EX}$ by the LED element 12 is represented by (Equation 2).

$$L_{EX} = L_{EX0} \cdot T_{EX} \qquad \text{(Equation 2)}$$

$L_{EX0}$ represents a light emission amount at reference temperature $T_0$. $T_{EX}$ represents a temperature dependency coefficient with respect to the light emission amount. The light emission amount $L_{EX0}$ indicates a different value for each LED element 12. In some case, a difference exceeding a double is perceived between elements. The difference in the light emission amount $L_{EX0}$ is due to a manufacturing process for the LED element 12 and does not depend on a structure of the fluorescence sensor 10. The temperature dependency coefficient $T_{EX}$ is a function with respect to temperature. The temperature dependency coefficient $T_{EX}$ can be calculated by a theory or an experiment. $T_{EX}$ may be a linear function or a nonlinear function depending on a type and a temperature range of the LED element 12.

An excitation light amount $IN_{EX}$ made incident on the PD element 13 is represented by (Equation 3).

$$IN_{EX}=L_{EX} \cdot \beta_{EX}=(L_{EX0} \cdot T_{EX}) \cdot \beta_{EX} \qquad \text{(Equation 3)}$$

$\beta_{EX}$ represents a coefficient representing light condensation efficiency on the PD element 13 of excitation light determined as a result of attenuation of the excitation light due to scattering, reflection, and absorption in the photodetection system 20.

As a result, the excitation light detection signal $V_{EX}$ is represented by (Equation 4).

$$V_{EX}=IN_{EX} \cdot S_{EX} \cdot T_{SEX}=(L_{EX0} \cdot T_{EX} \cdot \beta_{EX}) \cdot S_{EX} \cdot T_{SEX} \qquad \text{(Equation 4)}$$

$S_{EX}$ represents photoelectric conversion efficiency of the PD element 13 with respect to excitation light. $T_{SEX}$ represents a temperature dependency coefficient of the photoelectric conversion efficiency.

Next, an expression representing temperature dependency of the fluorescent light detection signal $V_F$ in the detection signal V is calculated.

A fluorescent light emission amount $L_F$ of the indicator layer 16 is represented by (Equation 5).

$$L_F=\alpha_{EX} \cdot L_{EX} \cdot e \cdot T_F \qquad \text{(Equation 5)}$$

$\alpha_{EX}$ represents a coefficient indicating a ratio of excitation light that reaches the indicator layer 16 and contributes to fluorescent light emission among excitation lights generated by the LED element 12 and e represents a conversion coefficient (fluorescence yield) from excitation light to fluorescent light at a reference temperature $T_0$ and represents a function that depends on analyte concentration. $T_F$ represents a temperature dependency coefficient of a fluorescent light emission amount and represents a function with respect to temperature. The temperature dependency coefficient $T_F$ can be calculated by an experiment. $T_F$ is a linear function or a non-linear function depending on a temperature range.

If (Equation 2) is substituted in (Equation 5), (Equation 6) is obtained.

$$L_F=\alpha_{EX} \cdot (L_{EX0} \cdot T_{EX}) \cdot e \cdot T_F \qquad \text{(Equation 6)}$$

Further, a fluorescent light amount $I_{NF}$ made incident on the PD element 13 is represented by (Equation 7).

$$IN_F=L_F \cdot \beta_F(\alpha_{EX} \cdot L_{EX0} \cdot T_{EX} \cdot e \cdot T_F) \cdot \beta_F \qquad \text{(Equation 7)}$$

$\beta_F$ Represents a coefficient representing light condensation efficiency of fluorescent light determined as a result of attenuation of the fluorescent light F due to scattering, reflection, and absorption in the photodetection system 20.

As a result, the fluorescent light detection signal $V_F$ is represented by (Equation 8).

$$V_F=IN_F \cdot S_F \cdot T_{SF}=(\alpha_{EX} \cdot L_{EX0} \cdot T_{EX} \cdot e \cdot T_F \cdot \beta_F) \cdot S_F \cdot T_{SF} \qquad \text{(Equation 8)}$$

where, $S_F$ represents photoelectric conversion efficiency of the PD element 13 with respect to fluorescent light. $T_{SF}$ is a temperature dependency coefficient of the photoelectric conversion efficiency.

That is, the detection signal V, which is a sensor output, is represented by (Equation 9).

$$V = V_{EX} + V_F = (L_{EX0} \cdot T_{EX} \cdot \beta_{EX} \cdot S_{EX} \cdot T_{SEX}) + (\alpha_{EX} \cdot L_{EX0} \cdot T_{EX} \cdot e \cdot T_F \cdot \beta_F \cdot S_F \cdot T_{SF})$$

$$= a \cdot T_{EX} \cdot T_{SEX} + b \cdot T_{EX} \cdot T_F \cdot T_{SF} \qquad \text{(Equation 9)}$$

where, $a = L_{EX0} \cdot \beta_{EX} \cdot S_{EX}$ (Equation 10) and $b = \alpha_{EX} \cdot L_{EX0} \cdot e \cdot \beta_F \cdot S_F$ (Equation 11).

Coefficients a and b do not have temperature dependency. When analyte concentration is fixed at $C_0$, a conversion coefficient e for conversion from excitation light to fluorescent light is a constant $e_{C0}$. That is, during the correction processing, the constant a and the constant b can be regarded as constants.

(Equation 9) is a relational expression between two unknown numbers a and b and known functions $T_{EX}$, $T_{SEX}$, $T_F$, and $T_{SF}$ and the detection signal V at known analyte concentration. That is, (Equation 9) indicates that, if $T_{EX}$, $T_{SEX}$, $T_F$, and $T_{SF}$ at two temperatures and the detection signal V at the temperatures are calculated, a and b are calculated.

(Equation 9) is represented by (Equation 12) according to (Equation 1).

$$V_F = V - V_{EX} = V - a \cdot T_{EX} \cdot T_{SEX} \qquad \text{(Equation 12)}$$

Next, a procedure for measuring sensor outputs at two different temperatures and calculating a fluorescent component is explained. Note that it is possible to treat the PD element 13 neglecting temperature dependency thereof at least in a temperature range of about 30 to 50°C. Therefore, the temperature dependency is simplified and represented as $T_{SEX} = T_{SF} = 1$.

First, (Equation 13) holds concerning temperature $T_1$.

$$V_{(1)} = a \cdot T_{EX(1)} + b \cdot T_{EX.(1)} \cdot T_{F(1)} \qquad \text{(Equation 13)}$$

Next, (Equation 14) holds concerning temperature $T_2$.

$$V_{(2)} = a \cdot T_{EX(2)} + b \cdot T_{EX(2)} \cdot T_{F(2)} \qquad \text{(Equation 14)}$$

A temperature dependency coefficient with respect to a light emission amount of the LED element 12 at the temperature $T_1$ is represented as $T_{EX(1)}$, a temperature dependency coefficient of a fluorescent light emission amount at the temperature $T_1$ is represented as $T_{F(1)}$, a temperature dependency coefficient of the LED element 12 at the temperature $T_2$ is represented as $T_{EX(2)}$, and a temperature dependency coefficient of a fluorescent light emission amount at the temperature $T_2$ is represented as $T_{F(2)}$. From (Equation 13) and (Equation 14), the coefficient a is calculated by (Equation 15).

$$\text{(Equation 15)}$$

$$a = \frac{V_1 T_{EX(2)} T_{F(2)} - V_2 T_{EX(1)} T_{F(1)}}{T_{EX(1)} T_{EX(2)} (T_{F(2)} - T_{F(1)})}$$

If (Equation 15) is substituted in (Equation 13), the coefficient b is calculated. On the other hand, from (Equation 12) and (Equation 15), (Equation 16) for calculating a fluorescent light detection signal $V_{F(1)}$ from the detection signal $V_1$ at the temperature $T_1$ is obtained.

(Equation 16)

$$V_{F(1)} = V_1 - \frac{V_1 T_{EX(2)} T_{F(2)} - V_2 T_{EX(1)} T_{F(1)}}{T_{EX(1)} T_{EX(2)} (T_{F(2)} - T_{F(1)})} T_{EX(1)}$$

Correction arithmetic processing for removing the excitation light detection signal $V_{EX}$ from the detection signal V ends. The coefficient a calculated above depends on neither temperature nor analyte concentration. Therefore, thereafter, it is possible to calculate, at arbitrary temperature T, the fluorescent light detection signal $V_F$ on the basis of the detection signal V of the PD element 13 and the temperature dependency coefficient $T_{EX}$ of a light emission amount at the temperature T.

Note that the temperatures $T_1$ and $T_2$ during correction, fluorescent light outputs $V_{F(1)}$ and $V_{F(2)}$ corresponding to the temperatures $T_1$ and $T_2$, and the analyte concentration $C_0$ at this point are initial values in calculating the analyte concentration C at arbitrary temperature after the correction arithmetic processing.

When the analyte is glucose, the analyte concentration $C_0$ is calculated using self monitoring of blood glucose (SMBG).

Next, processing for converting the fluorescent light detection signal $V_F$ into the analyte concentration C is explained.

The analyte concentration C is calculated from (Equation 17) using a function $\delta$.

$$C = \delta(T, V_F) \qquad\qquad (\text{Equation } 17)$$

T represents temperature and $V_F$ represents a fluorescent light detection signal at the temperature T. (Equation 17) includes a temperature dependency correction coefficient $\varepsilon$ for correcting temperature dependency of the fluorescent light detection signal $V_F$ and a coefficient $\gamma$ for adjusting an initial value of analyte concentration to $C_0$. However, the temperature dependency correction coefficient $\varepsilon$ can be calculated from an expression derived from an experiment or a theory or can be tabulated as a data group. The coefficient $\gamma$ is determined using the initial value. The function $\delta$ is an expression derived from an experiment or a theory. However, the function $\delta$ may be a tabulated data group. If the temperature dependency correction coefficient $\varepsilon$ and the coefficient $\gamma$ are set in advance, the analyte concentration C can be calculated on the basis of the fluorescent light detection signal $V_F$ and a temperature detection signal at arbitrary temperature T using (Equation 17).

<Correction processing procedure>

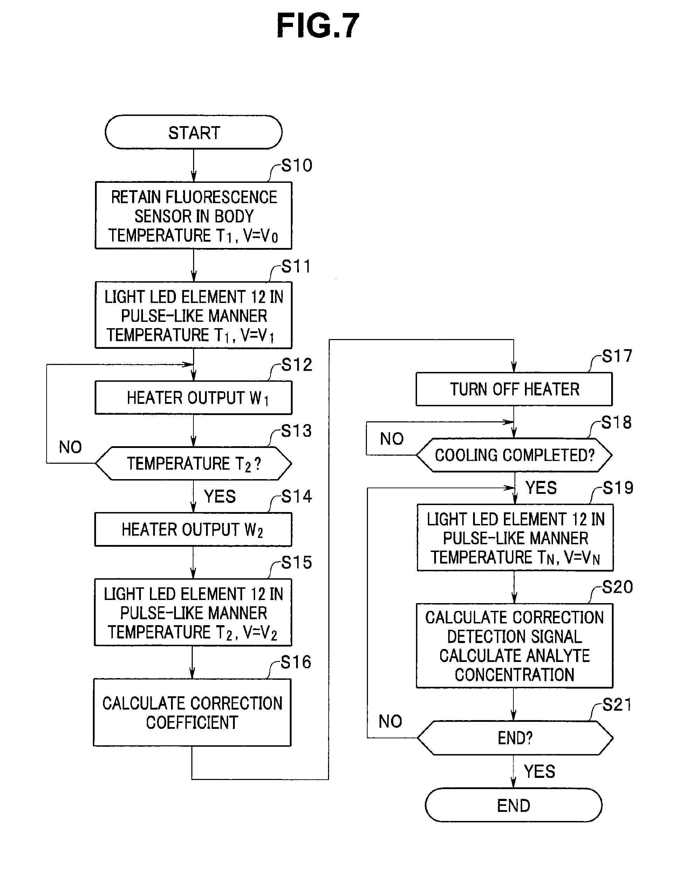

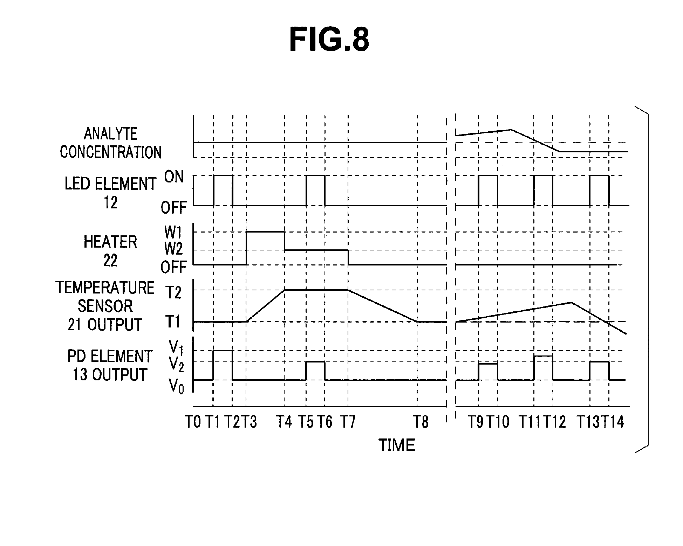

Next, a correction processing procedure of the fluorescence sensor 10 is explained on the basis of a flowchart of Fig. 7 and a time chart of Fig. 8.

<Step S 1 0>

At time T0, the needle distal end portion 5 of the needle-type fluorescence sensor 4 is stabbed and the fluorescence sensor 10 is set in a body. At this point, the excitation light E is not irradiated, the heater 22, which is the temperature adjusting section, is off, temperature of the fluorescence sensor 10 is $T_1$, and a detection signal (a photoelectromotive force) of the PD element 13 is $V_0$.

<Step S11> First detection signal acquiring step

At Time T1 to T2, the LED element 12 is lit (turned on) and the detection signal $V_1$ is detected. Temperature at this point is $T_1$. That is, the first detection signal $V_1$ at the first temperature $T_1$ is acquired.

<Steps S12 and S13> Heating step

At time T3 to T4, an electric current is applied to the heater 22 and the heater 22 has an output $W_1$. The fluorescence sensor 10 is heated until temperature of the fluorescence sensor 10 reaches the temperature $T_2$ (step S13: YES).

<Step S14>

At time T4 to T7, the heater has an output $W_2$ and the temperature of the fluorescence sensor 10 is retained at $T_2$.

<Step S15> Second detection signal acquiring step

At time T5 to T6, the LED element 12 is lit and the detection signal $V_2$ is detected. That is, the second detection signal $V_2$ at the second temperature $T_2$ is acquired.

<Step S 16> Correction coefficient calculating step

The constant a, which is a correction coefficient, is calculated from the detection signal $V_1$, the detection signal $V_2$, and (Equation 15).

<Steps S 17 and S18> Correction processing completion

At time T7, the heater 22 is turned off and naturally cooled. When the cooling is completed at time T8 (S 18: YES), constant calculation processing, i.e., correction processing is completed.

<Step S19> Measuring step

At time T9 to T10, the LED element 12 is lit. Temperature $T_N$ and a detection signal $V_N$ at that point are measured.

<Step S20> Calculating step

The arithmetic section 70 calculates the fluorescent light detection signal $V_F$ using the temperature $T_N$, the detection signal $V_N$, and the constant a and further calculates the analyte concentration C using (Equation 17).

<Step S21>

Thereafter, the irradiation of excitation light, the acquisition of a detection signal, and the measurement of temperature are repeated until an end (S21: YES) in a constant period, whereby continuous measurement of the analyte concentration C is performed.

In a correction method of the fluorescence sensor 10, it is possible to obtain an accurate value of the fluorescent light detection signal $V_F$ in the detection signal V from the detection signals V at different two temperatures using a temperature controlling function. That is, the fluorescence sensor 10 can purely obtain only the fluorescent light detection signal $V_F$. Therefore, the fluorescence sensor 10 and the correction method of the fluorescence sensor 10 have high detection accuracy.

For example, when To and $T_{F(1)}$ are set as $T_0=32°C$ and $T_{F(1)}=1$, at $T_1=37°C$, $T_{EX(1)}=0.94$, $T_{F(1)}=0.78$, and $V_{(1)}=261(-)$ and, at $T_2=42°C$, $T_{EX(2)}=0.87$, $TF_{(2)}=0.55$, and $V_{(2)}=223(-)$.

Consequently, the correction coefficient a=205 and the fluorescent light detection signal $V_{F(1)}=56$ are obtained.

The temperature adjusting function explained above is heating means for raising temperature through heating. However, the temperature adjusting function may be cooling means for lowering temperature through cooling. Further, the fluorescence sensor may include the heating means and the cooling means.

The correcting method for calculating the fluorescent light detection signal $V_F$ on the basis of the two detection signals V at the two different temperatures is explained above. However, the correction may be performed on the basis of three or more detection signals at three or more different temperatures. In particular, when it is necessary to eliminate the influence of not only the excitation light E but also an external light detection signal, which is a detection signal of the PD element, due to external light from the outside of the fluorescence sensor 10, it is necessary to perform correction for calculating the fluorescent light detection signal $V_F$ on the basis of detection signals at three kinds of temperatures.

The present invention is not limited to the embodiments and the like explained above and combinations, various alterations, modifications, and the like of the embodiments and the like can be made without departing from the spirit of the invention.

This application is filed claiming priority from Japanese Patent Application No. 2010-240019 filed in Japan on October 26, 2010, disclosed contents of which are cited in the specification of this application, the claims, and the drawings.

**Claims**

1. A correction method of a fluorescence sensor comprising:

a first detection signal acquiring step for acquiring, at a first temperature, a first detection signal using a fluorescence sensor including a light-emitting element configured to generate excitation light, an indicator layer configured to generate fluorescent light corresponding to the excitation light and an analyte amount, and a photoelectric conversion element configured to output a detection signal in which an excitation light detection signal due to the excitation light is superimposed on a fluorescent light detection signal due to the fluorescent light, the fluorescence sensor having a temperature detecting function for outputting a temperature detection signal and a temperature adjusting function;
a second detection signal acquiring step for acquiring, at a second temperature, a second detection signal when the analyte amount is the same as the analyte amount in the first detection signal acquiring step;
a correction coefficient calculating step for calculating, on the basis of the first detection signal and the second detection signal, a correction coefficient for correcting the fluorescent light detection signal; and
a correcting step for correcting subsequent detection signals using the correction coefficient and the temperature detection signal.

2. The correction method of the fluorescence sensor according to claim 1, wherein at least respective parts of the photoelectric conversion element, the light-emitting element that transmits the fluorescent light, and the indicator layer are formed in a same region on a substrate in this order.

3. The correction method of the fluorescence sensor according to claim 1 or 2, wherein the fluorescence sensor includes a temperature adjusting section having the temperature adjusting function.

4. The correction method of the fluorescence sensor according to claim 3, wherein the temperature adjusting section is a heater, the heater being a resistance heating type element.

5. The correction method of the fluorescence sensor according to claim 1 or 2, wherein the light-emitting element has the temperature adjusting function.

6. The correction method of the fluorescence sensor according to claim 1 or 2, wherein the photoelectric conversion element is a diode having the temperature adjusting function.

7. The correction method of the florescence sensor according to claim 1, 2, or 6, wherein the photoelectric conversion element is a diode having the temperature detecting function.

8. A fluorescence sensor comprising:

a light-emitting element configured to generate excitation light;
an indicator layer configured to generate fluorescent light corresponding to the excitation light and an analyte amount; and
a photoelectric conversion element configured to output a detection signal in which an excitation light detection signal due to the excitation light is superimposed on a fluorescent light detection signal due to the fluorescent light,
wherein the fluorescence sensor has a temperature detecting function for outputting a temperature detection signal and a temperature adjusting function.

9. The fluorescence sensor according to claim 8, further comprising a resistance heating type element wound around the indicator layer, the resistance heating type element having the temperature adjusting function.

10. The fluorescence sensor according to claim 9, wherein a correction coefficient for calculating the fluorescent light detection signal is calculated on the basis of a plurality of the detection signals when the fluorescence sensor is adjusted to a plurality of temperatures by the temperature adjusting section, and subsequent detection signals are corrected using the correction coefficient.

11. The fluorescence sensor according to claim 10, wherein at least respective parts of the photoelectric conversion element, the light-emitting element that transmits the fluorescent light, and the indicator layer are formed in a same region on an upper side of a substrate in this order.

**12.** The fluorescence sensor according to claim 11, wherein the fluorescence sensor is a needle type sensor including a connector section that fits with a fitting section of a main body section arranged on an outside of a body, the needle type sensor measuring an analyte in the body.

# FIG.1

# FIG.2

# FIG.3

# FIG.4

# FIG.5

# FIG.6

**INDICATOR LAYER** — 16

$E1$  $L_{EX} \times \alpha_{EX}$

**LED ELEMENT** — 12

(EQUATION5)

$$L_F = (L_{EX} \times \alpha_{EX}) \times e \times T_F$$

(EQUATION6)

$$L_F = (L_{EX0} \times T_{EX}) \times \alpha_{EX} \times e \times T_F$$

(EQUATION2)

$$L_{EX} = L_{EX0} \times T_{EX}$$

(EQUATION7)

$$IN_F = L_F \times \beta_F$$

$$= (\alpha_{EX} \times L_{EX0} \times T_{EX} \times e \times T_F) \times \beta_F$$

$F1$  $F2$  $E2$  (EQUATION3)

$$IN_{EX} = L_{EX} \times \beta_{EX}$$

**PD ELEMENT** — 13

$V_F$  (EQUATION1)  $V_{EX}$  (EQUATION4)

(EQUATION8)

$$V_F = IN_F \times S_F \times T_{SF}$$

$$= (L_{EX0} \times T_{EX} \times \alpha_{EX} \times e \times T_F \times \beta_F) \times S_F \times T_{SF}$$

$$V = V_F + V_{EX}$$

$$V_{EX} = IN_{EX} \times S_{EX} \times T_{SEX}$$

$$= (L_{EX0} \times T_{EX} \times \beta_{EX}) \times S_{EX} \times T_{SEX}$$

# FIG.7

START

S10
RETAIN FLUORESCENCE
SENSOR IN BODY
TEMPERATURE $T_1$, $V=V_0$

S11
LIGHT LED ELEMENT 12 IN
PULSE–LIKE MANNER
TEMPERATURE $T_1$, $V=V_1$

S12
HEATER OUTPUT $W_1$

S13
TEMPERATURE $T_2$?  NO

YES  S14
HEATER OUTPUT $W_2$

S15
LIGHT LED ELEMENT 12 IN
PULSE–LIKE MANNER
TEMPERATURE $T_2$, $V=V_2$

S16
CALCULATE CORRECTION
COEFFICIENT

S17
TURN OFF HEATER

S18
NO  COOLING COMPLETED?

YES  S19
LIGHT LED ELEMENT 12 IN
PULSE–LIKE MANNER
TEMPERATURE $T_N$, $V=V_N$

S20
CALCULATE CORRECTION
DETECTION SIGNAL
CALCULATE ANALYTE
CONCENTRATION

S21
NO  END?

YES
END

# FIG.8

## INTERNATIONAL SEARCH REPORT

| | International application No. |
|---|---|
| | PCT/JP2011/073558 |

A.   CLASSIFICATION OF SUBJECT MATTER
*G01N21/64*(2006.01)i, *G01N21/78*(2006.01)i

According to International Patent Classification (IPC) or to both national classification and IPC

B.   FIELDS SEARCHED

Minimum documentation searched (classification system followed by classification symbols)
G01N21/64, G01N21/78

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JMEDPlus/JST7580(JDreamII)

C.   DOCUMENTS CONSIDERED TO BE RELEVANT

| Category* | Citation of document, with indication, where appropriate, of the relevant passages | Relevant to claim No. |
|---|---|---|
| Y A | JP 5-302930 A   (Canon Inc.), 16 November 1993 (16.11.1993), claims; paragraphs [0025] to [0026]; fig. 6, 7 | 8-12 1-7 |
| Y A | JP 62-261036 A   (AVL AG.), 13 November 1987 (13.11.1987), claims; page 12, upper left column, line 2 to upper right column, line 8; fig. 9 | 8-12 1-7 |
| Y | JP 9-089838 A   (Matsushita Electric Industrial Co., Ltd.), 04 April 1997 (04.04.1997), claim 3; paragraphs [0023] to [0024] | 9-12 |
| Y | JP 2001-349961 A   (Denso Corp.), 21 December 2001 (21.12.2001), claims; paragraphs [0065] to [0077]; fig. 6 | 10-12 |

| ☒ | Further documents are listed in the continuation of Box C. | ☒ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November, 2011 (15.11.11) | 22 November, 2011 (22.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/073558 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2006/090596 A1  (Tokyo University of Marine Science and Technology), 31 August 2006 (31.08.2006), claims; paragraphs [0028] to [0029]; fig. 1 to 3 | 12 |
| A | JP 6-034546 A  (Tosoh Corp.), 08 February 1994 (08.02.1994), entire text; all drawings | 1-12 |

Form PCT/ISA/210 (continuation of second sheet) (July 2009)

<table>
<tr><td align="center"><b>INTERNATIONAL SEARCH REPORT</b><br><i>Information on patent family members</i></td><td>International application No.<br>PCT/JP2011/073558</td></tr>
</table>

| | | | |
|---|---|---|---|
| JP 5-302930 A | 1993.11.16 | JP 3062347 B2 | 2000.07.10 |
| JP 62-261036 A | 1987.11.13 | AT 77483 T | 1992.07.15 |
| | | AT A109486 A | 1989.09.15 |
| | | AT 390330 B | 1990.04.25 |
| | | AT A270786 A | 1989.11.15 |
| | | AT 390678 B | 1990.06.11 |
| | | DK 203587 A | 1987.10.24 |
| | | DK 168414 B1 | 1994.03.21 |
| | | EP 244394 A2 | 1987.11.04 |
| | | EP 244394 B1 | 1992.06.17 |
| | | JP 6-043965 B | 1994.06.08 |
| | | US 5039490 A | 1991.08.13 |
| | | US 5157262 A | 1992.10.20 |
| JP 9-089838 A | 1997.04.04 | JP 3635738 B2 | 2005.04.06 |
| JP 2001-349961 A | 2001.12.21 | DE 10127929 A1 | 2001.12.13 |
| | | JP 4211199 B2 | 2009.01.21 |
| | | US 2001/050766 A1 | 2001.12.13 |
| | | US 6686992 B2 | 2004.02.03 |
| WO 2006/090596 A1 | 2006.08.31 | (Family: none) | |
| JP 6-034546 A | 1994.02.08 | DE 69332365 T2 | 2003.02.13 |
| | | EP 580362 A1 | 1994.01.26 |
| | | EP 580362 B1 | 2002.10.09 |
| | | US 6144448 A | 2000.11.07 |

**EP 2 634 561 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5039490 A
- JP 2010240019 A